# EUROPEAN PATENT SPECIFICATION

(11) **EP 3 319 253 B1**
(45) Date of publication and mention of the grant of the patent: **17.07.2019**
(21) Application number: 16306451.2
(22) Date of filing: 07.11.2016
(51) Int. Cl.: H04L 1/00

(54) **A NETWORK SERVER, A MOBILE USER TERMINAL, AND A METHOD OF CONTROLLING A CHARACTERISTIC OF DATA TO BE SENT**
NETZWERKSERVER, MOBILES BENUTZERENDGERÄT UND VERFAHREN ZUR STEUERUNG EINER EIGENSCHAFT VON ZU SENDENDEN DATEN
SERVEUR RÉSEAU, TERMINAL UTILISATEUR MOBILE ET PROCÉDÉ DE CONTRÔLE D'UNE CARACTÉRISTIQUE DE DONNÉES DEVANT ÊTRE ENVOYÉES

(43) Date of publication of application: 09.05.2018
(73) Proprietor: Alcatel Lucent, 91620 Nozay (FR)
(72) Inventor: KUCERA, Stepan, 15 Dublin (IE); FRANCINI, Andrea, Chapel Hill, NC 27516 (US)
(74) Representative: Nokia EPO representatives

(56) References cited:
- MCKINLEY P K ET AL: "An experimental study of adaptive forward error correction for wireless collaborative computing", PROCEEDINGS OF SAINT 2001 SYMPOSIUM ON APPLICATIONS AND THE INTERNET; 8 - 12 JANUARY 2001; SAN DIEGO, CA, USA, IEEE COMPUTER SOCIETY, LOS ALAMITOS, CA, USA, 8 January 2001 (2001-01-08), pages 157-166, XP010532809, DOI: 10.1109/SAINT.2001.905179 ISBN: 978-0-7695-0942-6
- WU JIYAN ET AL: "Leveraging the Delay-Friendliness of TCP With FEC Coding in Real-Time Video Communication", IEEE TRANSACTIONS ON COMMUNICATIONS, IEEE SERVICE CENTER, PISCATAWAY, NJ. USA, vol. 63, no. 10, 1 October 2015 (2015-10-01), pages 3584-3599, XP011587168, ISSN: 0090-6778, DOI: 10.1109/TCOMM.2015.2469296 [retrieved on 2015-10-15]

## Description

### Field of the Invention

The present invention relates to telecommunications, in particular to wireless telecommunications; more particularly to a method of controlling a characteristic of data to be sent, a network server and a mobile user terminal for cellular wireless telecommunications.

### Description of the Related Art

Currently, Internet and application data are delivered using transport-layer protocols such as Transmission Control Protocol (TCP), User Datagram Protocol (UDP), and Real-time Transport Protocol (RTP). These protocols were originally designed for wireline networks but are known to perform poorly in connections having a wireless segment (e.g., connections over Third Generation Partnership Project (3GPP) Long Term Evolution (LTE), High Speed Packet Access (HSPA), or WiFi networks). The reason is that transport-layer protocols are unable to react rapidly to relatively fast changes in wireless channel capacity and delay. Their design philosophy of best-effort delivery often means efficient latency control is not possible, especially if high throughput is required.

Link throughput can be maximized by loss-based congestion control (e.g., TCP Cubic in Linux) but this mechanism is not suitable for use in wireless channels as this mechanism misinterprets channel fluctuations as congestion. This results in under-utilization of the wireless link capacity. As described in the 2012 paper by Junxian Huang, Feng Qian, Alexandre Gerber, Z. Morley Mao, Subhabrata Sen, and Oliver Spatscheck, entitled "A close examination of performance and power characteristics of 4G LTE networks" in Proceedings of the 10th international conference on Mobile systems, applications, and services (MobiSys '12). ACM, New York, NY, USA, 225-238. DOI=http://dx.doi.org/10.1145/2307636.2307658, typically around half of available wireless capacity is not used. In addition, repetitive testing to determine the current wireless capacity limit causes buffer overflows and data losses, making joint optimization of throughput and latency performance not possible.

Delay-based congestion control mechanisms (for example TCP Vegas and TCP Compound in Microsoft Windows) are able to provide better latency performance but at the price of substantially reduced throughput.

Similar impacts of wireless channel fluctuations can be observed in relation to active queue management in routers and performance enhancers. Whenever the capacity of a wireless channel undergoes a (temporary) deep fade, buffer overflow prevention algorithms start dropping data unnecessarily and/or disproportionately, independently of whether the data drop policy is based on queue length or queuing delay.

Furthermore, the reliance of congestion control at a sending server on feedback from a receiving client (in other words, an end user or end user application) causes additional delays, often leading to reduced interactivity between the server and client. The reason is that the uplink wireless channel, which is part of the client to server feedback loop, is a source of instability and stochastic perturbations independent of and additional to the downlink wireless channel.

Technology-specific issues may further exacerbate the inefficiency of long client-oriented feedback loops.

In WiFi networks, uplink traffic often collides with downlink traffic as a standardized method is used of contention-based medium access control (CSMA/CA). High-speed downlink data rates, generating a high volume of acknowledgments on the uplink, cause frequent collisions of uplink and downlink data that typically seriously degrade the overall capability of the WiFi network to reliably deliver data in either direction. Acknowledgment aggregation may partially eliminate this problem at the cost of increased delay and reduced interactivity between sending server and client.

In cellular networks such as LTE and HSPA, temporary spikes of increased delay in the uplink acknowledgment delivery may be caused by the medium access control scheduler discretely prioritizing users for transmission under the proportional fair criterion. Uplink 'starvation', in other words insufficiency of resources assigned to uplink communications, is especially noticeable under high-throughput downlink conditions, quickly generating unfair conditions.

The following two papers provide technical background:
MCKINLEY P K ET AL: An experimental study of adaptive forward error correction for wireless collaborative computing", PROCEEDINGS OF SAINT 2001 SYMPOSIUM ON APPLICATIONS AND THE INTERNET; 8-12 JANUARY 2001; SAN DIEGO, CA, USA, IEEE COMPUTER SOCIETY, LOS ALAMITOS, CA, USA, 8 January 2001 (2001-01-08), pages 157-166, XP010532809, D01; 10.1109/SAINT.2001.905179 ISBN; 978-0-7695-0942-6
   and
WU JIYAN ET AL: "Leveraging the Delay-Friendliness of TCP With FEC Coding in Real-Time Video Communication", IEEE TRANSACTIONS ON COMMUNICATIONS, IEEE SERVICE CENTER, PISCATAWAY, NJ, USA, vol.63, no. 10, 1 October 2015 (2015-10-01), pages 3584-3599, XP011587168, ISSN: 0090-6778, D01: 10.1109/TCOMM.2015.2469296

It is known from the above mentioned paper by McKinley PK et al to provide a method of controlling at a network server a characteristic of data to be sent to a cellular telecommunications base station for transmission to a mobile user terminal by:
generating in the mobile user terminal a feedback signal representing sparse feedback,
sending the feedback signal representing sparse feedback to the base station,
forwarding the signal to the network server, and
   in the network server determining the sparse feedback from the feedback signal, and
adjusting a characteristic of data to be sent dependent on the sparse feedback.

### Summary

The present invention is characterised over the disclosure of the above-mentioned paper by McKinley et al in that the sparse feedback is a repetitive heartbeat signal, the repetitive heartbeat signal being a periodic signal indicating correct functioning; and the network server adjusts the characteristic by dependent on determining the heartbeat signal in the feedback signal continuing to undertake at least one of sending data to a buffer and sending permission to the buffer to send data.

The reader is referred to the appended independent claims. Some preferred features are laid out in the dependent claims.

An example of the present invention is a method of controlling at a network server a characteristic of data to be sent to a cellular telecommunications base station for transmission to a mobile user terminal by:
generating in the mobile user terminal a feedback signal representing sparse feedback,
sending the feedback signal representing sparse feedback to the base station,
forwarding the signal to the network server, and
in the network server determining the sparse feedback from the feedback signal, and
adjusting a characteristic of data to be sent dependent on the sparse feedback.

Preferably, the characteristic is level of Forward Error Correction overhead and the adjusting the characteristic comprises adjusting the level of Forward Error Correction overhead dependent on the sparse feedback determined from the feedback signal.

Preferably, the sparse feedback is indicative of level of use of Forward Error Correction recovery to reconstruct payload data packets sent by the base station but not received and decoded at the mobile user terminal.

Preferably the level of Forward Error Correction overhead is adjusted dependent upon the level of use of FEC recovery indicated in the sparse feedback going outside an acceptable range. Preferably, the FEC overhead is increased upon the indicated level of FEC recovery being determined as exceeding a first threshold. Preferably the FEC overhead is reduced upon the indicated level of FEC recovery being determined as going below a second threshold.

Alternatively, preferably the sparse feedback is a repetitive heartbeat signal, and dependent on determining the heartbeart signal in the feedback signal the network server continues to undertake at least one of sending data to the buffer and sending permission to the buffer to send data.

Alternatively, preferably the sparse feedback is an indicator of quality of service experienced by the user terminal.

Preferably the feedback signal is sent using a scheduled medium access scheme.

Preferably the data to be sent to the mobile user terminal is sent by the network server to a queue in a buffer in the base station, for transmission to the mobile user terminal; the queue being managed so that a target range of time in queue is maintained so as store the data in the queue before transmission for between a given non-zero minimum duration and a given maximum duration.

Examples of the present invention also relates to corresponding network server and a mobile user terminal.

An example of the present invention relates to a network server configured to control a characteristic of data to be sent to a cellular telecommunications base station for transmission to a mobile user terminal, in which the network server comprises:
a controller configured to receive a feedback signal representing sparse feedback that was generated in the mobile user terminal, sent to the base station and forwarded to the network server, and the controller is configured to determine the sparse feedback from the feedback signal; and
a generator configured to adjust a characteristic of data to be sent dependent on the sparse feedback.

Preferably, the characteristic is level of Forward Error Correction overhead applied and the generator is configured to adjust the characteristic by adjusting the level of Forward Error Correction overhead dependent on the sparse feedback determined from the feedback signal.

Preferably the sparse feedback is indicative of level of use of Forward Error Correction recovery to reconstruct payload data packets sent by the base station but not received at the mobile user terminal.

Another example of the present invention relates to a mobile user terminal for cellular wireless telecommunications configured to:
generate a feedback signal representing sparse feedback,
send the feedback signal representing sparse feedback to a base station to adjust a characteristic of data to be sent dependent on the sparse feedback,
wherein the sparse feedback is indicative of level of use of Forward Error Correction recovery at the mobile user terminal to reconstruct payload data packets sent by the base station but not received at the mobile user terminal.

### Brief Description of the Drawings

An embodiment of the present invention will now be described by way of example and with reference to the drawings, in which:
Figure 1 is a diagram illustrating a network connected to a user terminal according to an embodiment of the present invention,
Figure 2 is a diagram illustrating in more detail the FEC augmenter shown in Figure 1,
Figure 3 is a diagram illustrating formation of Forward Error Correction (FEC) packets using random linear codes, and
Figure 4 is a diagram illustrating recovery of a delayed payload packet using FEC packets.

### Detailed Description

We first describe an example system from a more structural perspective, then look at various aspects of its function.

### System

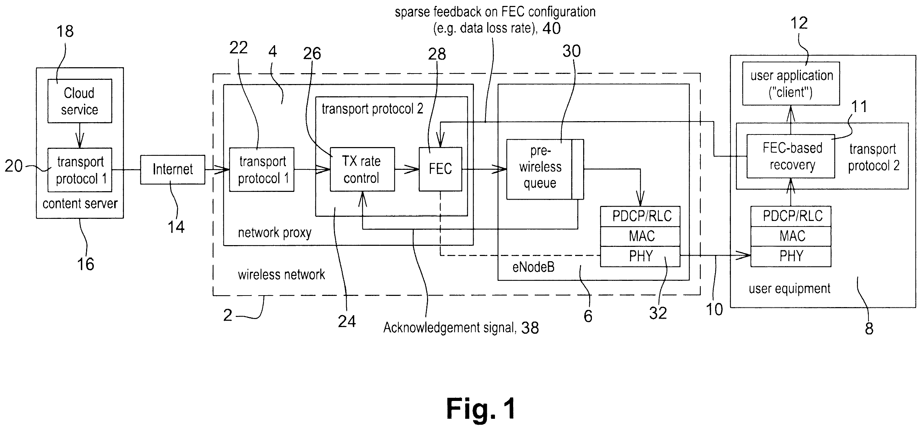

As shown in Figure 1, there is a wireless network 2 including a network server 4 and a base station 6 for cellular telecommunications, often denoted an Extended Node B (eNodeB) in 3GPP terminology. The base station 6 is connected to the network server 4, often referred to as a network proxy as a proxy (or proxy server) is a server that acts as an intermediary for requests from clients seeking resources from other (more remote) servers. There is a mobile user terminal 8, often referred to as a User Equipment (UE) in 3GPP terminology, that connects to the base station 6 by a wireless link 10. In this example, the user terminal 8 is a smartphone.

There is a client application 12 run on the user equipment 8 which is connected via the wireless link 10, the base station 6, network server 4, and the internet 14 to a content server 16 (which in this example includes a Cloud-based entity 18) so as to provide an interactive service to the user terminal 8. In this example, the service is a remote rendering of an augmented reality overlay.

As part of providing the service, payload data (not shown in Figure 1) is provided from the content server 16 to the network server 4 using a first transport-layer protocol at a transmitter 20 of the content server 16 and receiver 22 of the network server 4. In this example, the first transport-layer protocol is Transmission Control Protocol (TCP). The network proxy 4 may belong to a commercial carrier or be within an enterprise.

In another similar example (not shown), the first transport-layer protocol 20 is User Datagram Protocol (UDP).

The network proxy 4 encapsulates the service payload data using a second transport-layer protocol in its own transmitter 24. This second transport-layer protocol is a connection-less transport protocol of IETF-standardized nature, namely UDP in this example. In some otherwise similar examples (not show) the connection-less transport protocol is of a proprietary nature.

The so-encapsulated payload data is forwarded to the base station 6 on its way towards the client application 12 in the user terminal 8.

The transmitter 24 of the network proxy 4 includes a transmission data rate controller 26 and a Forward Error Correction augmenter 28. The payload data is forwarded by the transmitter 24 of the network proxy 4 at a controlled data rate (under the control of the controller 26) and augmented with forward-error correction (FEC) data by the augmenter 28.

The base station 6 includes a pre-transmission buffer 30 as wireless transmission are bursty in nature. In this example the base station 6 is an LTE small cell base station. The base station 6 includes a transmitter 32 which when ready to transmit, reads the data from the buffer 30 and transmits the data over the wireless link 10.

The user terminal 8 includes a receiver 9 and an FEC recovery stage 11.

### Data Forwarding from Network Proxy to Base Station

As explained above, the network proxy 4 sends payload data such that occupancy of the buffer 30 is maintained within a given pre-set target range.

### Trade-off

By maintaining small but non-zero queue occupancy in the buffer 30, several objectives are achieved by the network proxy 4, namely a good trade-off is achieved of high data throughput and low latency (little delay for data in the buffer), with a good capacity available to prevent buffer overflow (and consequential data discarding).

It will be understood that the buffer 30 in the base station 6 is typically a traffic bottle-neck in the network 2 (which is well-backhauled, i.e. has ample backhaul resources for data traffic).

There is a trade-off between throughput and latency (i.e. delay) where, on the one hand, maximising buffer occupancy would give best throughput where there is varying wireless link capacity, but, on the other hand, minimising buffer occupancy reduces the time for which data is delayed by being queued in buffer 30. Buffer delay is the dominant component of end-to-end data delivery delay, even in links with a relatively large delay due to wireless propagation.

Packet sojourn times in the buffer 30 are monitored allowing a determination to be made whether a queue is tolerable (i.e. the delay due to queuing is acceptably short or an undesirable build-up of the queue has occurred due to data being ingressed into the buffer 30 faster than data egresses out.

The target occupancy range (or target level or set point) is selected based on the delay time (also known as sojourn time) for which a packet spends queued in the buffer before transmission (which might be of the order of 10 to 100 milliseconds in this example). In this example, the target occupancy is defined in terms of data packet sojourn times detected over a given period. In this example, the transmission data rate is set so as to provide a maximum acceptable packet selected as a function of measured round trip time between the proxy server 4 and user terminal 8.

### Multiple Queues

It will be noted that payload data is held in the buffer 30 in a respective queue. The buffer contains multiple queues, for example each dedicated to a respective particular client application 12 in a respective user terminal 8 (hence each queue may be considered 'private', which has the advantage of avoiding stochastic cross-traffic detrimental effects, such as in an extreme case, periods of overload).

In some otherwise similar embodiments (not shown), the queue in the buffer are per bearer (i.e. wireless channel), or per application (to multiple clients).

### Data Discard

Packets in the buffer for greater than a particular maximum sojourn time are discarded. This maximum time is configurable by the client application 12 based on requirements of the client application 12, or the wireless link 10 (in other words, the wireless bearer), such as of link quality.

Data packets exceeding the maximum sojourn time in the respective queue in the buffer 30 are discarded. This way, buffered data that became invalid from the point of view of a latency-sensitive application, e.g. due to a wireless outage, do not need to be transmitted after the wireless outage is over. In other words, additional post-outage delays required for buffer clearing are avoided.

Preferably, it is the mobile client application 12 that configures the discard limits, given its knowledge of application requirements. In this example, the maximum sojourn time is set as the difference between the latency limit of the client application 12 and the propagation delay from buffer queue to client application.

### Feedback

To enable fast and dependable feedback for driving the transmit data rate control in controller 26, data packets received from the network proxy 4 by the pre-transmission buffer 30 of the base station are acknowledged at the transport layer (L4) to the network proxy 4. These acknowledgements are carried in an acknowledgement signal 38 from the buffer 30 to the transmission rate controller 26. The controller adjusts its transmission rate to keep the queue delay in the buffer 30 at a desired level (i.e. with a desired range). (It can thus be considered that congestion control is undertaken based on queue delay using frequent data ACKing).

The user terminal 8 does not acknowledge individual packets at the transport layer (L4). The reliability of data transfer from the buffer to the client application is discussed below.

### Data Protection

To ensure reliable delivery of payload data from the buffer 30 in the base station 6 to the mobile client application 12 in the user terminal, both a retransmission scheme and a forward error correction (FEC) scheme are used. The retransmission scheme operates at low layers (Layer 1 and Layer 2) of the Internet Protocol Suite or Open Systems Initiative (OSI) model applicable. The forward error correction (FEC) is undertaken at a higher layer (layer 4).

We will now describe FEC in more detail.

### Forward Error Correction (FEC)

As regards FEC, in the FEC augmenter 28 of the network proxy 4, each FEC packet is generated as a weighted random linear combination of N payload packets 34.

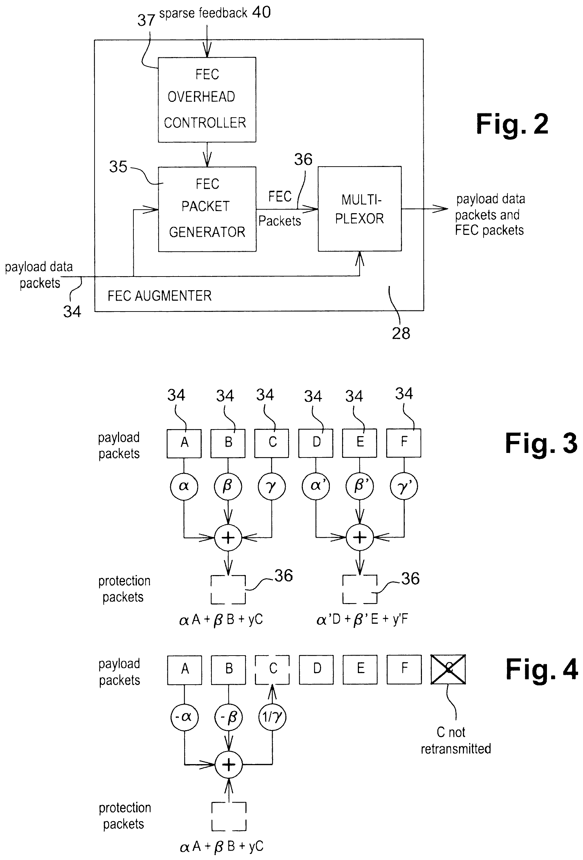

As shown in Figure 2, in the augmenter 28 payload packets 34 are passed to an FEC packet generator 35 where FEC packets 36 are generated as explained herebelow.

As shown in Figure 3, multiplicative weights α, β, γ are selected at random, using a single algorithm, but in an independent manner (in the sense that each generation is a unique event). The values are random, but uniform in the sense that the values generated are within a predetermined range and have a statistically equal distribution (i.e. likelihood of occurring).

In this simple example shown in Figure 3, M FEC packets 36 are generated from each set of N consecutive payload data packets 34, where in this example M is 1 and N is 3. Of course, other examples are possible with different values of M and/or N.

Referring back to Figure 2, the FEC packets 36 and payload packets 34 are multiplexed for transmission to the base station 6.

### Recovery of a payload packet using Forward Error Correction (FEC)

As shown in Figure 4 a payload data packet C that is lost due to a data transmission error or is transmitted but not delivered to the mobile client application 12 of the user terminal 8 within a data delivery deadline, is recoverable. This payload data packet recovery is possible in real-time in the mobile terminal 8 in the FEC recovery stage 11 of the user terminal 8 from the payload data packets and FEC packets that have been successfully delivered. This is provided FEC combining weights α, β, γ satisfy the usual mathematical conditions for recovering missing information.

In the example shown in Figure 4, payload packets A and B and FEC packet αA+ βB+ γC are all received, bur payload data packet C is not. In the FEC recovery stage 8, as A, B are received and determined, and α, β, γ are known, so payload packet C is calculated.

As indicated figuratively in Figure 4, as payload packet C is recovered, there is no need to request retransmission of payload packet C.

The ratio M/N is an indication of the FEC overhead (for example, 1 FEC packet is added for each 3 payload data packets in a particular example). This ratio is also an indication of the maximum loss rate for which FEC recovery is possible (for example if more than 1 in 3 data packets are not delivered in that particular example, recovery of those payload data packets is not possible).

### More on FEC

In this example, the payload data packets 34 and FEC packets 36 are sent over the same wireless link 10 (in other words wireless channel) from the base station 6 to the user terminal 8. When a longer than acceptable queuing delay in the buffer 30 of the base station 6 occurs, FEC data packets are discarded before payload data packets are considered expired due to excessive delay. Here, it is considered that payload data packets are more important to transmit (in other words have a higher priority) than FEC packets (which are less important to transmit (in other words have a lower priority).

In some alternative embodiments (not shown), FEC data packets are sent over a second channel, whilst payload data packets are sent over a first channel. The FEC data packets are sent over a second channel for example using a Best Effort delivery scheme as known, for example, from Internet Protocol.

Dependent on the level of FEC overhead being appropriately high, the frequency of Layer 1 re-transmissions may be reduced so as to reduce overall latency, but only to the extent of maintaining acceptable quality of service and/or FEC overhead.

### Sparse Feedback from the user terminal

As mentioned previously, explicit feedback, in the sense of acknowledgements of successful delivery of specific data packets, is not provided by the user terminal 8. Instead, sparse feedback 40 is provided, by which we mean feedback as to user terminal operation at a lower rate and/or at a higher level (in other words more abstract) than acknowledgement of receipt of data packets.

In this example information as to the level of use of FEC to reconstruct packets not received, in other words, feedback as to the payload data loss rate.

In this example, this sparse feedback 40 is sent uplink using scheduled medium access under the control of a medium access control scheduler as known in LTE (in other words in a scheduled approach as opposed to a contention-based approach) . This avoids performance degrading contention between uplink and downlink data flows as would happen in contention-based systems such as WiFi.

### Adaption of FEC based on sparse feedback

Referring back to Figure 2, the sparse feedback 40 is received by the FEC augmenter in its FEC overhead controller 37.

The FEC overhead controller 37 of the FEC augmenter 28 adjusts the FEC overhead when the level of FEC recovery indicated in the sparse feedback 40 moves outside an acceptable range. If the level of FEC recovery is too high the FEC overhead is increased. Conversely if the level of FEC recovery is too low, the FEC overhead is reduced. It may be considered that the underlying principle is that FEC recovery is used, but not too little nor too much. An example of each is provided below.

For example, say the current FEC overhead is 1/10 (1 FEC packet is sent for every 10 payload packets) but for example two in every ten payload packets need to be recovered in the FEC recovery stage 11 of the user terminal 8. The FEC augmenter 28 in the network proxy 4 receives as sparse feedback 40 this information of FEC recovery level, i.e data loss rate of 2 in every 10, and so reacts by increasing the FEC overhead to, for example, 2/8 (2 FEC packets for each 8 payload packets).

Conversely, say the current FEC overhead is 1/10 (1 FEC packet is sent for every 10 payload packets) but for example only two in every fifty payload packets need to be recovered in the FEC recovery stage 11 of the user terminal 8. The FEC augmenter 28 in the network proxy 4 receives as sparse feedback 40 this information of FEC recovery level, i.e. data loss rate of 2 in every 100, and so reacts by reducing the FEC overhead to, for example, 1/20 (1 FEC packets for each 20 payload packets).

### Some Alternatives

In some other otherwise similar examples, the sparse feedback is in the form of Heartbeat signals (in other words repetitive signals, for example periodic signals, indicating correct functioning, in other words that the user terminal is operational). The network proxy then either sends explicit control signals to the buffer in the base station indicating "heartbeat received so ok to continue to send to that user terminal", or simply merely continuing to send data to the relevant queue for that user terminal in the buffer

In some other otherwise similar examples, the sparse feedback is in the form of statistics on quality of service. The level of FEC overhead may be adjusted in response to the detected quality of service in similar fashion to as described above with reference to Figure 1.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of controlling at a network server (4) a characteristic of data to be sent to a cellular telecommunications base station (6) for transmission to a mobile user terminal (8) by:
generating in the mobile user terminal a feedback signal (40) representing sparse feedback,
sending the feedback signal representing sparse feedback to the base station (6),
forwarding the signal to the network server, and
in the network server (4) determining the sparse feedback (28) from the feedback signal, and
adjusting (26) a characteristic of data to be sent dependent on the sparse feedback
**characterised in that**
the sparse feedback is a repetitive heartbeat signal, the repetitive heartbeat signal being a periodic signal indicating correct functioning; and the network server (4, 26) adjusts the characteristic dependent on determining the heartbeat signal in the feedback signal by continuing to undertake at least one of sending data to a buffer in the base station (30) and sending permission to the buffer (30) to send the data over the wireless link (10).

2. A method according to claim 1, in which the sparse feedback is an indicator of quality of service experienced by the user terminal.

3. A method according to any preceding claim, in which the feedback signal is sent using a scheduled medium access scheme.

4. A method according to any preceding claim, in which the data to be sent to the mobile user terminal (8) is sent by the network server to a queue in the buffer (30) in the base station (6), for transmission to the mobile user terminal;
the queue being managed so that a target range of time in queue is maintained so as store the data in the queue before transmission for between a given non-zero minimum duration and a given maximum duration.

5. A network server (4) configured to control a characteristic of data to be sent to a cellular telecommunications base station (6) for transmission to a mobile user terminal (8), in which the network server comprises:
a controller (37) configured to receive a feedback signal (40) representing sparse feedback that was generated in the mobile user terminal, sent to the base station (6) and forwarded to the network server, and the controller(37) is configured to determine the sparse feedback from the feedback signal; and
a generator (35) configured to adjust a characteristic of data to be sent dependent on the sparse feedback;
**characterised in that**
the sparse feedback is a repetitive heartbeat signal, the repetitive heartbeat signal being a periodic signal indicating correct functioning; and in use the network server (4, 26) adjusts the characteristic dependent on determining the heartbeat signal in the feedback signal by continuing to undertake at least one of sending data to a buffer in the base station (30) and sending permission to the buffer (30) to send the data over the wireless link.

6. A network server according to claim 5, in which the sparse feedback is an indicator of quality of service experienced by the user terminal.

7. A network server according to claim 5, or claim 6 in which the feedback signal is sent using a scheduled medium access scheme.

8. A network server according to any of claims 5 to 7, in which, in use, the data to be sent to the mobile user terminal (8) is sent by the network server to a queue in the buffer (30) in the base station (6), for transmission to the mobile user terminal;
the queue being managed, in use, so that a target range of time in queue is maintained so as store the data in the queue before transmission for between a given non-zero minimum duration and a given maximum duration.

## Patentansprüche

1. Verfahren zum Steuern einer Eigenschaft von Daten, die zur Übertragung an ein mobiles Anwenderendgerät (8) an eine Zellentelekommunikations-Basisstation (6) gesendet werden sollen, bei einem Netzserver (4) durch Folgendes:
Erzeugen eines Rückmeldungssignals (40), das eine einfache Rückmeldung repräsentiert, in dem mobilen Anwenderendgerät,
Senden des Rückmeldungssignals, das die einfache Rückmeldung repräsentiert, an die Basisstation (6),
Weiterleiten des Signals an den Netzserver, und
Bestimmen der einfachen Rückmeldung (28) aus dem Rückmeldungssignal in dem Netzserver (4), und
Einstellen (26) einer Eigenschaft von Daten, die gesendet werden sollen, in Abhängigkeit von der einfachen Rückmeldung,
**dadurch gekennzeichnet, dass**
die einfache Rückmeldung ein sich wiederholendes Herzschlagsignal ist, wobei das sich wiederholende Herzschlagsignal ein periodisches Signal ist, das den richtigen Betrieb angibt; und wobei der Netzserver (4, 26) die Eigenschaft in Abhängigkeit von der Bestimmung des Herzschlagsignals in dem Rückmeldungssignal durch weiteres Durchführen des Sendens von Daten an einen Puffer in der Basisstation (30) und/oder des Sendens einer Berechtigung an den Puffer (30), die Daten über die drahtlose Übertragungsstrecke (10) zu senden, einstellt.

2. Verfahren nach Anspruch 1, in dem die einfache Rückmeldung ein Indikator der durch das Anwenderendgerät erfahrenen Dienstqualität ist.

3. Verfahren nach einem vorhergehenden Anspruch, in dem das Rückmeldungssignal unter Verwendung eines Schemas für den geplanten Medienzugriff gesendet wird.

4. Verfahren nach einem vorhergehenden Anspruch, in dem die Daten, die an das mobile Anwenderendgerät (8) gesendet werden sollen, durch den Netzserver zur Übertragung an das mobile Anwenderendgerät an eine Warteschlange in dem Puffer (30) in der Basisstation (6) gesendet werden;
wobei die Warteschlange in der Weise gemanagt wird, dass ein Zielzeitbereich in der Warteschlange so aufrechterhalten wird, dass die Daten vor der Übertragung zwischen einer gegebenen von null verschiedenen minimalen Dauer und einer gegebenen maximalen Dauer in der Warteschlange gespeichert werden.

5. Netzserver (4), der dafür konfiguriert ist, eine Eigenschaft von Daten zu steuern, die zur Übertragung an ein mobiles Anwenderendgerät (8) an eine Zellentelekommunikations-Basisstation (6) gesendet werden sollen, wobei der Netzserver Folgendes umfasst:
einen Controller (37), der dafür konfiguriert ist, ein Rückmeldungssignal (40) zu empfangen, das eine einfache Rückmeldung repräsentiert, das in dem mobilen Anwenderendgerät erzeugt wurde, an die Basisstation (6) gesendet und an den Netzserver weitergeleitet wurde, und wobei der Controller (37) dafür konfiguriert ist, die einfache Rückmeldung aus dem Rückmeldungssignal zu bestimmen; und
einen Generator (35), der dafür konfiguriert ist, eine Eigenschaft der zu sendenden Daten in Abhängigkeit von der einfachen Rückmeldung einzustellen;
**dadurch gekennzeichnet, dass**
die einfache Rückmeldung ein sich wiederholendes Herzschlagsignal ist, wobei das sich wiederholende Herzschlagsignal ein periodisches Signal ist, das den richtigen Betrieb angibt; und wobei der Netzserver (4, 26) in Verwendung die Eigenschaft in Abhängigkeit von der Bestimmung des Herzschlagsignals in dem Rückmeldungssignal durch weiteres Durchführen des Sendens von Daten an einen Puffer in der Basisstation (30) und/oder des Sendens einer Berechtigung an den Puffer (30), die Daten über die drahtlose Übertragungsstrecke zu senden, einstellt.

6. Netzserver nach Anspruch 5, in dem die einfache Rückmeldung ein Indikator der durch das Anwenderendgerät erfahrenen Dienstqualität ist.

7. Netzserver nach Anspruch 5 oder Anspruch 6, in dem das Rückmeldungssignal unter Verwendung eines Schemas für den geplanten Medienzugriff gesendet wird.

8. Netzserver nach einem der Ansprüche 5 bis 7, in dem die Daten, die an das mobile Anwenderendgerät (8) gesendet werden sollen, durch den Netzserver in Verwendung zur Übertragung an das mobile Anwenderendgerät an eine Warteschlange in dem Puffer (30) in der Basisstation (6) gesendet werden;
wobei die Warteschlange in Verwendung in der Weise gemanagt wird, dass ein Zielzeitbereich in der Warteschlange so aufrechterhalten wird, dass die Daten vor der Übertragung zwischen einer gegebenen von null verschiedenen minimalen Dauer und einer gegebenen maximalen Dauer in der Warteschlange gespeichert werden.

## Revendications

1. Procédé permettant de contrôler au niveau d'un serveur réseau (4) une caractéristique de données devant être envoyées à une station de base de télécommunication cellulaire (6) pour une transmission à un terminal utilisateur mobile (8) par :
la génération dans le terminal utilisateur mobile d'un signal de rétroaction (40) représentant une rétroaction avec retenue,
l'envoi du signal de rétroaction représentant une rétroaction avec retenue à la station de base (6),
la transmission du signal au serveur réseau, et
dans le serveur réseau (4), la détermination de la rétroaction avec retenue (28) à partir du signal de rétroaction, et
l'ajustement (26) d'une caractéristique de données devant être envoyées en fonction de la rétroaction avec retenue
**caractérisé en ce que**
la rétroaction avec retenue est un signal de battement de coeur répétitif, le signal de battement de coeur répétitif étant un signal périodique indiquant un fonctionnement correct ; et **en ce que** le serveur réseau (4, 26) ajuste la caractéristique en fonction de la détermination du signal de battement de coeur dans le signal de rétroaction en continuant à effectuer au moins une action parmi l'envoi de données à une mémoire tampon dans la station de base (30) et l'envoi d'une permission à la mémoire tampon (30) d'acheminer les données sur la liaison sans fil (10).

2. Procédé selon la revendication 1, dans lequel la rétroaction avec retenue est un indicateur de la qualité de service ressentie par le terminal utilisateur.

3. Procédé selon l'une quelconque des revendications précédentes, dans lequel le signal de rétroaction est envoyé en utilisant un schéma d'accès au support planifié.

4. Procédé selon l'une quelconque des revendications précédentes, dans lequel les données devant être envoyées au terminal utilisateur mobile (8) sont envoyées par le serveur réseau à une file d'attente dans la mémoire tampon (30) dans la station de base (6), pour une transmission au terminal utilisateur mobile ;
la file d'attente étant gérée de sorte qu'une plage cible de temps dans la file d'attente est maintenue pour stocker les données dans la file d'attente avant une transmission pendant une durée minimum non zéro donnée et une durée maximum donnée.

5. Serveur réseau (4) configuré pour contrôler une caractéristique de données devant être envoyées à une station de base de télécommunication cellulaire (6) pour une transmission à un terminal utilisateur mobile (8), le serveur réseau comprenant :
un contrôleur (37) configuré pour recevoir un signal de rétroaction (40) représentant une rétroaction avec retenue qui a été générée dans le terminal utilisateur mobile, envoyé à la station de base (6) et transmis au serveur réseau, et le contrôleur (37) est configuré pour déterminer la rétroaction avec retenue à partir du signal de rétroaction ; et
un générateur (35) configuré pour ajuster une caractéristique de données devant être envoyées en fonction de la rétroaction avec retenue ;
**caractérisé en ce que**
la rétroaction avec retenue est un signal de battement de coeur répétitif, le signal de battement de coeur répétitif étant un signal périodique indiquant un fonctionnement correct ; et **en ce que**, en mode de fonctionnement, le serveur réseau (4, 26) ajuste la caractéristique en fonction de la détermination du signal de battement de coeur dans le signal de rétroaction en continuant à effectuer au moins une action parmi l'envoi de données à une mémoire tampon dans la station de base (30) et l'envoi d'une permission à la mémoire tampon (30) d'acheminer les données sur la liaison sans fil.

6. Serveur réseau selon la revendication 5, dans lequel la rétroaction avec retenue est un indicateur de la qualité de service ressentie par le terminal utilisateur.

7. Serveur réseau selon la revendication 5 ou la revendication 6, dans lequel le signal de rétroaction est envoyé en utilisant un schéma d'accès au support planifié.

8. Serveur réseau selon l'une quelconque des revendications 5 à 7, dans lequel, en mode de fonctionnement, les données devant être envoyées au terminal utilisateur mobile (8) sont envoyées par le serveur réseau à une file d'attente dans la mémoire tampon (30) dans la station de base (6), pour une transmission au terminal utilisateur mobile ;
la file d'attente étant gérée, en mode de fonctionnement, de sorte qu'une plage cible de temps dans la file d'attente est maintenue pour stocker les données dans la file d'attente avant une transmission pendant une durée minimum non zéro donnée et une durée maximum donnée.
